# EUROPEAN PATENT APPLICATION

(11) **EP 2 712 499 A1**
(43) Date of publication of application: **02.04.2014**
(21) Application number: 12763270.1
(22) Date of filing: 21.02.2012
(51) Int. Cl.: A01G 9/02, A01G 9/00, A01G 27/00

(54) **PLANT CULTIVATION DEVICE**

(30) Priority: 31.03.2011 JP 2011077742
(71) Applicant: Tsubakimoto Chain Co., Osaka-shi, Osaka 530-0005 (JP)
(72) Inventor: HIRAI, Tatsuya, Osaka-shi, Osaka 530-0005 (JP); KOUNO, Kouji, Osaka-shi, Osaka 530-0005 (JP); ITO, Go, Osaka-shi, Osaka 530-0005 (JP); OKAZAKI, Yu, Osaka-shi, Osaka 530-0005 (JP); NAKAMURA, Kenji, Niwa-gun, Aichi 480-0138 (JP)
(74) Representative: Patentanwälte Westphal, Mussgnug & Partner
(86) International application number: PCT/JP2012/054158
(87) International publication number: WO 2012/132646

(57) **Abstract**

Provided is a plant cultivation device that improves cultivation efficiency and usability. A plant cultivation device (100) comprises: a rack unit (120) provided with cultivation racks (S) on which cultivation units (110) accommodating plants are stored as culture medium units (111); and a conveying device which moves along a horizontal movement path defined by a guide rail (149), and performs transport of the culture medium units (111) and loading/unloading of the culture medium units (111) to/from the cultivation racks (S). Multiple cultivation racks (S) constitute a cultivation rack row (C), in which the cultivation racks are arranged at multiple levels in an up-down direction. The rack unit (120) comprises: a cultivation storage (121) constituted of multiple cultivation rack rows (C); and a loading/unloading station (122) having a stock rack row (170), in which the holding frames (115) of cultivation units (110) not accommodating plants are stored as empty units. The transport device (130) performs loading/unloading of the holding frames (115) to/from the stock rack row (170).

## Description

### TECHNICAL FIELD

The present invention relates to a plant cultivation device that includes a plurality of cultivation racks, which store cultivation units conveyed by a conveying device, the cultivation units being capable of accommodating plants to be cultivated.

### BACKGROUND ART

A plant cultivation device is known that includes a plurality of cultivation units that can accommodate plants to be cultivated, a cultivation storage provided with a plurality of cultivation racks that can store the cultivation units, and a conveying device that transports the cultivation units and carries them into or out of the cultivation racks. Further, the cultivation units accommodating the plants are stored in the cultivation racks by the conveying device (for example, refer to Patent Documents 1 and 2).

### PRIOR ART DOCUMENTS

### Patent Documents

Patent Document 1: Japanese Laid-Open Patent Publication No. 2000-209970
Patent Document 2: Japanese Laid-Open Patent Publication No. 2001-78568

### SUMMARY OF THE INVENTION

### Problems that the Invention is to Solve

To increase the cultivation efficiency, it is desirable for a plant cultivation device of this type to operate with a high ratio of cultivation racks that store cultivation units (hereinafter, the ratio will be referred to as a "storage efficiency,"). Each cultivation unit accommodates a plant to be cultivated (hereinafter, referred to as a "culture medium unit"), and the cultivation racks constitute the cultivation storage.

However, when the culture medium unit of which the cultivation has been finished in the plant cultivation device is transported, as it is, to the exterior of the plant cultivation device in order to harvest the grown plant or when the cultivation unit with no plant planted due to the completion of cultivation in the plant cultivation device (referred to as an "empty unit") is stored outside the plant cultivation device, troublesome work is involved to carry the culture medium unit or the empty unit to the exterior of the plant cultivation device or to carry it in the plant cultivation device. When the culture medium unit prepared by loading a plant onto an empty unit is transported from the exterior of the plant cultivation device to the interior thereof, troublesome work is involved. As a result, the storage efficiency is kept low for an extended time, which lowers the cultivation efficiency and degrades the usability of the plant cultivation device.

Moreover, since culture medium unit and empty unit are transported by different conveying devices, it may take a long time from loading a plant onto the cultivation unit to storing this cultivation unit on the cultivation rack. In addition, the need to prepare the different conveying devices can increase the costs of the plant cultivation device.

On the other hand, storing empty units on the cultivation rack decreases the storage efficiency and involves troublesome work to carry empty units out of the cultivation rack in order to put plants in them. This lowers the cultivation efficiency.

Typically, the cultivation unit exhibits increased strength in order to ease handling with the conveying device in the plant cultivation device. In many cases, accordingly, cultivation units are heavy.

However, when the cultivation units are heavy, the culture medium units, which are cultivation units with a plant planted, become heavier. If a culture medium unit is transported by hand, the transport work is hard, thus degrading the usability of the plant cultivation device.

Furthermore, in the case where the cultivation storage is constituted by a cultivation rack row in which a plurality of cultivation racks are arranged vertically in a multistage fashion, when the plant cultivation device has finished the cultivation and a culture medium unit is carried out of the cultivation storage for the purpose of harvest, troublesome work may be involved to carry the culture medium unit out of the cultivation rack at the end of the cultivation period. Thus, the usability of the plant cultivation device will be degraded.

When the cultivation storage is constituted by a cultivation rack row in which a plurality of cultivation racks are arranged vertically in a multistage fashion, if a cultivation water supply device separately supplies a cultivating water to each of the culture medium units stored on each of the cultivation racks of one cultivation rack row, the structure of the cultivating water supply system and discharge system becomes complicated. Thus, the cultivation storage becomes larger, leading to a cost increase in the plant cultivation device.

An object of the present invention addressing the above problems is to provide a plant cultivation device that improves its cultivation efficiency and usability.

Another object of the present invention is to provide a plant cultivation device that can be made compact.

### Means for Solving the Problems

The invention of claim 1 solves the above described problems by providing a plant cultivation device including a plurality of cultivation units, a rack unit, and a conveying device. The cultivation units is capable of accommodating plants to be cultivated. The rack unit including a plurality of cultivation racks. The cultivation racks store the cultivation units as culture medium units. The cultivation units accommodate the plants. The conveying device moves on a moving pathway. The conveying device transports the culture medium units. The conveying device carries the culture medium units in or out of the cultivation racks. A predetermined number of the cultivation racks are arranged in a vertical direction in a multistage fashion to form a single cultivation rack row. The rack unit includes a cultivation storage and a work station. The cultivation storage includes a predetermined number of cultivation rack rows, the predetermined number being one or a greater number. The work station includes a stock section. The stock section stores the cultivation units that accommodate no plants as empty units. The conveying device carries the empty units in or out of the stock section.

The invention of claim 2 solves the above described problems by providing, in addition to the configuration of claim 1, a configuration in which the stock section is a stock rack row, the stock rack row includes the predetermined number or more of stock racks arranged in the vertical direction in a multistage fashion, the stock rack row is arranged adjacent to specific cultivation rack rows that are the cultivation rack rows, and the stock rack row is integrated with the specific cultivation rack rows.

The invention of claim 3 solves the above described problems by providing, in addition to the configuration of claim 1 or 2, a configuration in which the work station includes a loading section in which the culture medium units to be carried into the cultivation racks are placed by the conveying device stopping at a loading location on the moving pathway, and the stock section is located at a position where the conveying device can carry the empty units out of the stock section and into the loading section without moving on the moving pathway from the loading location.

The invention of claim 4 solves the above described problems by providing, in addition to the configuration of any one of claims 1 to 3, a configuration In which each cultivation unit includes an accommodating member and a holding member, wherein the accommodating member accommodates an object-to-be-stored, the object-to-be-stored has the plants planted therein, and the holding member removably holds the accommodating member, and the holding member is handled by the conveying device, and the empty unit is the holding member in a state where the accommodating member is removed.

The invention of claim 5 solves the above described problems by providing, in addition to the configuration of any one of claims 1 to 4, a configuration in which each of the cultivation rack rows includes a cultivation rack intended for loading or an uppermost cultivation rack on which the culture medium unit is stored immediately after it is carried into the cultivation storage by the conveying device, and a cultivation rack intended for unloading or a lowermost cultivation rack on which the culture medium unit is stored immediately before it is carried out of the cultivation storage by the conveying device, the work station includes an unloading section in which the culture medium unit is placed by the conveying device after being carried out of the cultivation rack intended for unloading or the lowermost cultivation rack and transported by the conveying device, and the unloading section is located at a position closer to the cultivation rack intended for unloading or the lowermost cultivation rack in each cultivation rack row than the cultivation rack intended for loading or the uppermost cultivation rack.

The invention of claim 6 solves the above described problems by providing, in addition to the configuration of any one of claims 1 to 4, a configuration in which the predetermined number of cultivation racks in the cultivation rack row are separated into a predetermined number of regions, wherein each region contains at least one of the cultivation racks, the cultivation rack contained in a lower one of the regions has a larger rack height than that contained in an upper one, the work station includes an unloading section in which the culture medium unit that has been carried out of the cultivation rack in a lowermost one of the regions by the conveying device is transported and placed by the conveying device, and the unloading section is located at a position closest to the lowermost region of the predetermined number of regions.

The invention of claim 7 solves the above described problems by providing, in addition to the configuration of any one of claims 1 to 6, a configuration in which each cultivation rack row is provided with a conduit, in each vertically adjacent pair of the cultivation racks, the culture medium unit stored in the upper cultivation rack is defined as an upper-side culture medium unit, and the culture medium unit stored in the lower cultivation rack is defined as a lower-side culture medium unit, the conduit guides an excess part of a cultivating water supplied to the upper-side culture medium unit from the upper-side culture medium unit to the lower-side culture medium unit.

The invention of claim 8 solves the above described problems by providing, in addition to the configuration of any one of claims 1 to 6, a configuration in which all the cultivation racks in each cultivation rack row are separated into an uppermost cultivation rack positioned uppermost, a lowermost cultivation rack positioned lowermost, and a plurality of middle cultivation racks between the uppermost and lowermost cultivation racks, the uppermost cultivation rack is provided with a first water inlet to which a cultivating water is supplied from a cultivating water supply source and a first water outlet through which an excess part of cultivating water is discharged to a drain, the lowermost cultivation rack is provided with a second water inlet to which the cultivating water is supplied from the cultivating water supply source and a second water outlet through which an excess part of cultivating water is discharged to the drain, of the middle cultivation racks, an upper-part middle cultivation rack directly below the uppermost cultivation rack is provided with a third water inlet to which the cultivating water is supplied from the cultivating water supply source, and a lower-part middle cultivation rack directly above the lowermost cultivation rack is provided with a third water outlet through which an excess part of cultivating water is discharged to the drain, a conduit is provided in each pair of vertically adjacent middle cultivation racks, the culture medium unit stored in the upper cultivation rack of the pair is defined as an upper-side culture medium unit, and the culture medium unit stored in the lower cultivation rack of the pair is defined as a lower-side culture medium unit, wherein the conduit guides the cultivating water supplied to the upper-side culture medium unit from the upper-side culture medium unit to the lower-side culture medium unit, and after being sequentially guided from the third water inlet to the culture medium units on a lower side through the conduit and then supplied to the culture medium unit stored on the lower-part middle cultivation rack, the cultivating water is discharged from the third water outlet.

### EFFECTS OF THE INVENTION

Accordingly, the plant cultivation device of the present invention includes cultivation units capable of accommodating plants to be cultivated, a rack unit including cultivation racks that store the cultivation units as culture medium units, the cultivation units accommodating the plants, and a conveying device moving on the moving pathway. The conveying device transports the culture medium units, and the conveying device carries the culture medium units in or out of the cultivation racks. Further, a predetermined number of cultivation racks are arranged in the vertical direction in a multistage fashion and constitute the single cultivation rack row. With this configuration, the cultivation racks storing the culture medium units configure the vertical multistage cultivation rack row. Therefore, the plant cultivation device increases the production number of plants to be cultivated while maintaining its compactness in the horizontal direction, by increasing the number of cultivation racks through the use of the vertical space. In addition to this, the present invention achieves the following distinctive advantages.

Specifically, according to the plant cultivation device of the invention according to claim 1, the rack unit includes a cultivation storage and a work station. The cultivation storage includes a predetermined number, which is one or a greater number, of cultivation rack rows. The work station includes a stock section, which stores the cultivation units accommodating no plants as empty units. With this configuration, the stock section that stores the empty units with no plants planted, for example, after the grown plants are harvested, is built into the plant cultivation device as part of the rack unit that includes the cultivation storage storing the culture medium units with the plants planted. Therefore, the need to transport the empty units to the exterior of the plant cultivation device is eliminated, and the working efficiency of transporting the empty units in order to obtain the culture medium units is improved. Consequently, the plant cultivation device can operate with high storage efficiency in the cultivation storage, thereby improving the cultivation efficiency of the plant cultivation device.

Moreover, since the conveying device carries the empty units in or out of the stock section, the empty units are transported to the stock section through the use of the conveying device that transfers the culture medium units between the cultivation racks in the cultivation storage and carries the culture medium units in or out of the cultivation racks. Therefore, a dedicated conveying device for carrying the empty stocks in or out of the stock section is unnecessary, so that the cost of the plant cultivation device is reduced. Furthermore, the empty units are carried in or out of the stock section through a carry-in/out mode that is the same as that for carrying the culture medium units in or out of the cultivation racks. It is thus possible to improve the usability of the plant cultivation device and to simplify the structure of the conveying device, thereby reducing the cost of the plant cultivation device.

The plant cultivation device of the invention according to claim 2 achieves the following advantage, in addition to the advantage of the invention according to claim 1.

Since the stock section is a stock rack row that includes the predetermined number or more of stock racks arranged in the vertical direction in a multistage fashion, the stock rack row reserves at least one of the stock racks storing the empty units, for each of all the cultivation rack rows in the cultivation storage. It is thus possible to improve the working efficiency of transporting the empty units and the culture medium units for each cultivation rack row, thereby improving the cultivation efficiency.

The stock rack row is arranged adjacent to the specific cultivation rack rows that are the cultivation rack rows, and are integrated with the specific cultivation rack rows. This reduces the size of the rack unit having the cultivation rack rows and the stock racks. Therefore, the plant cultivation device can be made compact.

The plant cultivation device of the invention according to claim 3 achieves the following advantage, in addition to the advantage of the invention according to claim 1 or 2.

The work station includes a loading section in which the culture medium units to be carried into the cultivation racks are placed by the conveying device stopping at the loading location on the moving pathway, and the stock section is positioned such that the conveying device can carry the empty units out of the stock section and into the loading section without moving on the moving pathway from the loading location. With this configuration, when an empty unit is carried out of the stock section by the conveying device in order to change the cultivation unit from the empty unit to the culture medium unit, the conveying device can carry the empty unit out of the stock section without moving on the moving pathway from the loading site. As a result, a time of transporting the empty unit in order to obtain the culture medium unit is shortened, so that the working efficiency of transporting the empty units is improved. Furthermore, the time of transporting the culture medium units, obtained from the empty units, to the cultivation rack is shortened, so that the usability of the plant cultivation device is improved.

The plant cultivation device of the invention according to claim 4 achieves the following advantage, in addition to the advantage of the invention according to any one of claims 1 to 3.

Each cultivation unit includes an accommodating member and a holding member. The accommodating member accommodates an object-to-be-stored, the object-to-be-stored has the plants planted therein, and the holding member removably holds the accommodating member and is handled by the conveying device. Increasing the strength of the holding member handled by the conveying device reliably facilitates the handling of the culture medium units with the conveying device. In addition, since the holding member acts as a reinforcing member that reinforces the accommodating member accommodating the plants, the weight of the accommodating member can be reduced. Therefore, when the plants are carried out of the plant cultivation device, only the accommodating member accommodating the plants can be extracted from the culture medium unit and transported. Consequently, it is possible to ease the work of transporting the accommodating member accommodating the plants when the plants are carried out of the plant cultivation device.

The empty unit corresponds to the holding member that assumes a state where the accommodating member is removed. Accordingly, the holding member from which the accommodating member is removed is left in the plant cultivation device, for example, by being kept in the stock section as the empty unit. It is thus possible to create the culture medium unit easily by combining the holding member with the accommodating member that accommodates the plants of which the cultivation has been started.

The plant cultivation device of the invention according to claim 5 achieves the following advantage, in addition to the advantage of the invention according to any one of claims 1 to 4.

Each cultivation rack row includes a cultivation rack intended for loading or the uppermost cultivation rack on which each culture medium unit is stored immediately after it is carried in the cultivation storage by the conveying device and a cultivation rack intended for unloading or the lowermost cultivation rack on which each culture medium unit is stored immediately before it is carried out of the cultivation storage by the conveying device. The work station includes an unloading section in which each culture medium unit is placed by the conveying device after being carried out of the cultivation rack intended for unloading or the lowermost cultivation rack and transported by the conveying device. The unloading section is positioned closer to the cultivation rack intended for unloading or the lowermost cultivation rack in each cultivation rack row than the cultivation rack intended for loading or the uppermost cultivation rack. With the above configuration, with regard to the cultivation racks in the cultivation rack row, the distance between the unloading section and the cultivation rack intended for unloading or the lowermost cultivation rack is made shorter than the distance between the unloading section and the cultivation rack intended for loading or the uppermost cultivation rack. Therefore, a time is shortened during which the culture medium unit carried out of the cultivation storage, typically, the culture medium unit accommodating the plants of which the cultivation has been finished in the plant cultivation device and harvest period comes are transported to the unloading section. It is thus possible to improve the working efficiency of transporting the culture medium units in order to unload them, thereby improving the usability of the plant cultivation device.

The plant cultivation device of the invention according to claim 6 achieves the following advantage, in addition to the advantage of the invention according to any one of claims 1 to 4.

The cultivation racks in each cultivation rack row are separated into a predetermined number of regions, each region containing at least one of the cultivation racks. The cultivation rack contained in a lower one of the regions has a larger rack height than that contained in an upper one thereof has. The work station includes the unloading section in which each culture medium unit is placed by the conveying device, each culture medium unit having been carried out of the cultivation rack in a lowermost one of the regions and been transported, by the conveying device. The unloading section is positioned closest to the lowermost one of the predetermined number of regions. With the above configuration, with regard to the cultivation racks in the cultivation rack row, the distance between the unloading section and the lowermost region is made shorter than the distance between the unloading section and any of the regions excluding the lowermost region. Therefore, a time is shortened during which the culture medium unit unloaded from the cultivation storage, typically, the culture medium unit accommodating the plants that have grown up and become tall, is transported to the unloading section. It is thus possible to improve the working efficiency of transporting the culture medium units in order to unload them, thereby improving the usability of the plant cultivation device.

The plant cultivation device of the invention according to claim 7 achieves the following advantage, in addition to the advantage of the invention according to any one of claims 1 to 6.

Each cultivation rack row is provided with the conduit, through which the excess part of the cultivating water supplied to the upper-side culture medium unit is guided from the upper-side culture medium unit to the lower-side culture medium unit, the upper-side culture medium unit being each culture medium unit stored on the upper one of the cultivation racks arranged adjacent to one another in the vertical direction, the lower-side culture medium unit being each culture medium unit stored on one of the cultivation racks which is positioned on a lower side. With this configuration, the excess part of the cultivating water supplied to the upper-side culture medium unit is supplied to the lower-side culture medium unit through the conduits. Therefore, the supply system and the discharge system for the cultivating water becomes simpler in structure (e.g. piping) than that for independently supplying or discharging the cultivating water to or from each of the culture medium units. It is thus possible to make the plant cultivation device compact, thereby reducing the cost of the plant cultivation device.

The plant cultivation device of the invention according to claim 8 achieves the following advantage, in addition to the advantage of the invention according to any one of claims 1 to 6.

All the cultivation racks in each cultivation rack row are separated into the uppermost cultivation rack positioned uppermost, the lowermost cultivation rack positioned lowermost, and the plurality of middle cultivation racks between the uppermost and lowermost cultivation racks. The uppermost cultivation rack is provided with the first water inlet to which the cultivating water is supplied from the cultivating water supply source; and the first water outlet through which the excess cultivating water is discharged to the drain. The lowermost cultivation rack is provided with the second water inlet to which the cultivating water is supplied from the cultivating water supply source; and the second water outlet through which the excess cultivating water is discharged to the drain. Of the middle cultivation racks, the upper-part middle cultivation rack directly below the uppermost cultivation rack is provided with the third water inlet to which the cultivating water is supplied from the cultivating water supply source, and the lower-part middle cultivation rack directly above the lowermost cultivation rack is provided with the third water outlet through which the excess cultivating water is discharged to the drain. Each of the middle cultivation racks arranged adjacent to one another in the vertical direction is provided with the conduit, through which the cultivating water supplied to the upper-side culture medium unit is guided from the upper-side culture medium unit to the lower-side culture medium unit, the upper-side culture medium unit being each culture medium unit stored on one of the middle cultivation racks which is positioned on an upper side, the lower-side culture medium unit being each culture medium unit stored on one of the middle cultivation racks which is positioned on a lower side. The cultivating water is sequentially guided from the third water inlet to the culture medium units on the lower side through the conduit and after being supplied to each culture medium unit stored on the lower-part middle cultivation rack, the cultivating water is discharged from the third water outlet. With this configuration, in each cultivation rack row, the supply and discharge of the cultivating water for each of the three parts, or the uppermost cultivation rack, the lowermost cultivation rack and the middle cultivation racks, can be controlled independently of one another. Therefore, when the culture medium units are being carried in or out of each cultivation rack, an area in which the supply of the cultivating water is stopped can be specified. It is thus possible to improve the cultivation efficiency of the plant cultivation device while maintaining the simple structure of the cultivating water supply device.

### BRIEF DESCRIPTION OF THE DRAWINGS

Fig. 1 is a perspective view showing an entire plant cultivation device according to one embodiment of the present invention;
Fig. 2 is a diagram showing a cultivation storage in the plant cultivation device, as viewed in the direction of arrow II of Fig. 1;
Fig. 3 is an exploded perspective view of a cultivation unit in the plant cultivation device of Fig. 1;
Fig. 4 is an enlarged cross-sectional view of a main part in part IV of Fig. 2;

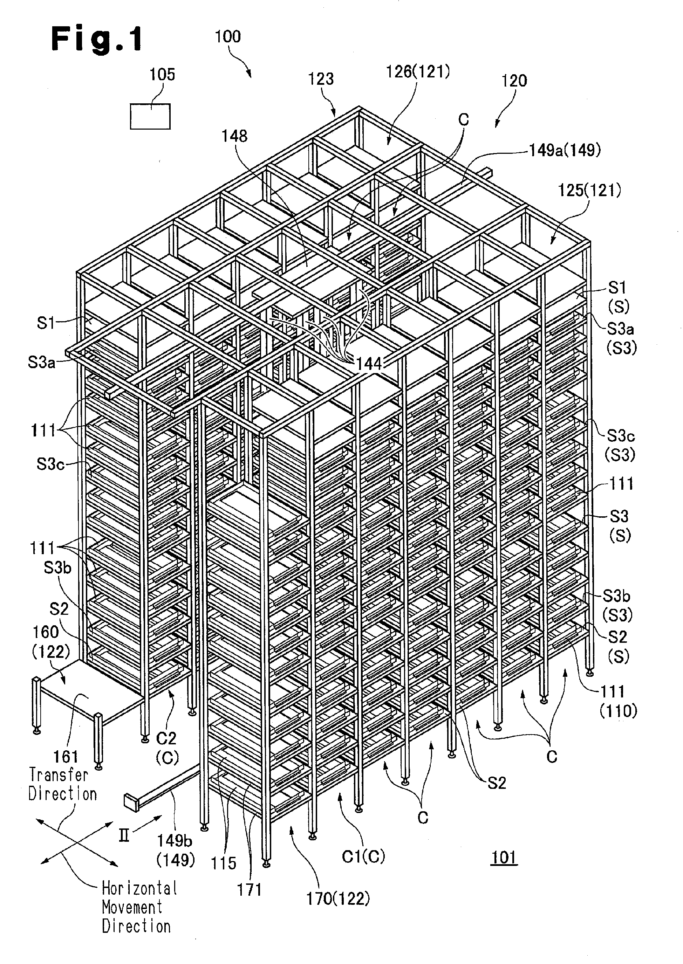

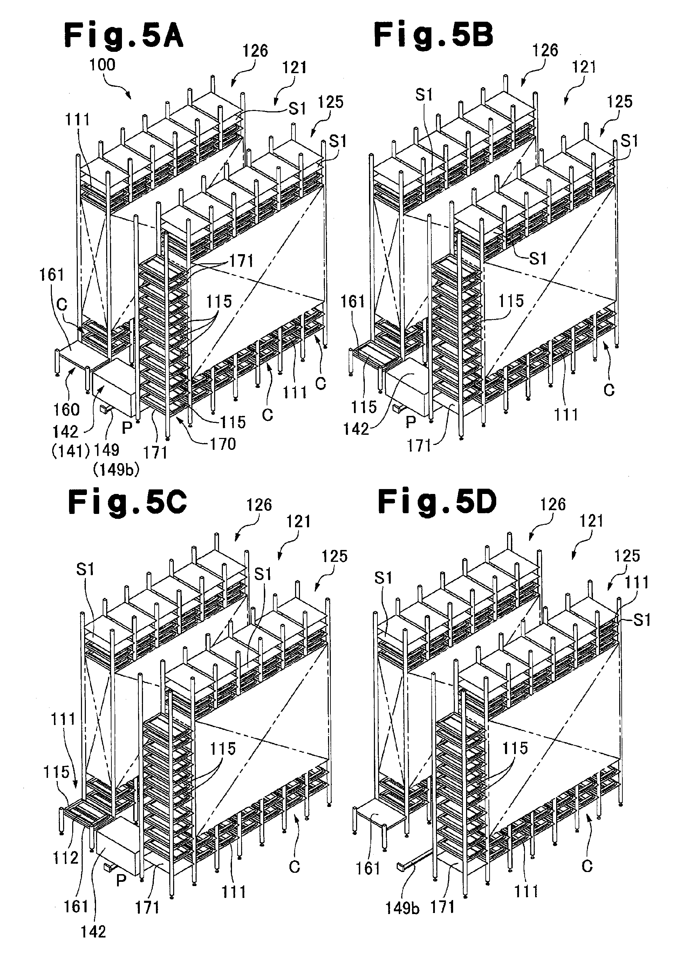

Figs. 5 are explanatory perspective views of a main part of the plant cultivation device of Fig. 1, showing a loading preparation step and a loading step for the culture medium unit, in which 5A is a diagram showing a state where a conveying device is positioned at a loading/unloading site in order to move a holding frame from a stock section to an loading/unloading section, 5B is a diagram showing a state where the holding frame is conveyed from the stock section and is placed in the loading/unloading section, by the conveying device; 5C is a diagram showing a state where a culture media tray is held by the holding frame in the loading/unloading section whereby the culture medium unit is created, and 5D is a diagram showing a state where the culture medium unit in the loading/unloading section is conveyed by the conveying device and is stored on an uppermost cultivation rack of the cultivation storage; and

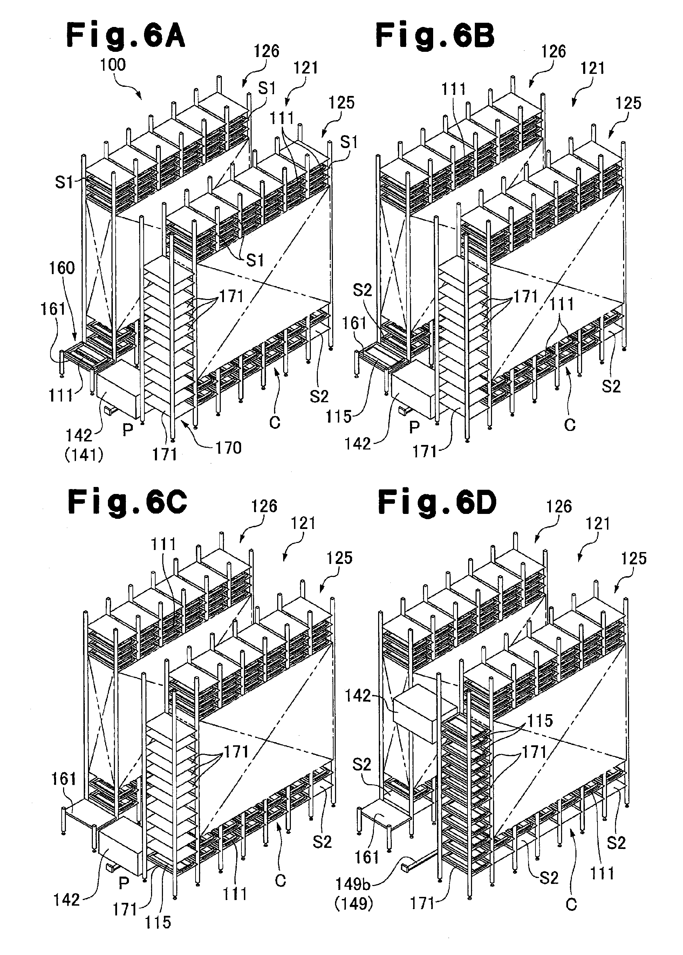

Figs. 6 are explanatory diagrams similar to Figs. 5, showing an unloading step for the culture medium unit, in which 6A is a diagram showing a state where in the cultivation storage in which all the holding frames in the stock section are made culture medium units and are stored on the cultivation racks, the culture medium unit stored on the lowermost cultivation rack is conveyed and is placed in the loading/unloading section, by the conveying device; 6B is a diagram showing a state where the culture medium tray is removed from the holding frame in the loading/unloading section; 6C is a diagram showing a state where the holding frame is conveyed from the loading/unloading section and are placed in the stock section, by the conveying device; and 6D is a diagram showing a state where the culture medium units are unloaded from all the lowermost cultivation racks in the cultivation storage, and the holding frames are stored in the stock section.

### MODES FOR CARRYING OUT THE INVENTION

A plant cultivation device of the present invention includes: a plurality of cultivation units capable of accommodating plants to be cultivated; a rack unit including a plurality of cultivation racks, the cultivation racks storing the cultivation units as culture medium units, the cultivation units accommodating the plants; and a conveying device that moves on a moving pathway, the conveying device transporting the culture medium units, the conveying device carrying the culture medium units in or out of the cultivation racks. Further, a predetermined number of the cultivation racks are arranged in a vertical direction in a multistage fashion to form a single cultivation rack row. The rack unit includes a cultivation storage and a work station. The cultivation storage includes a predetermined number, which is one or a greater number, of cultivation rack rows. The predetermined number is one or a greater number. The work station includes a stock section, the stock station storing the cultivation units accommodating no plants as empty units. The conveying device carries the empty units in or out of the stock section. There is no limitation on a specific aspect of the plant cultivation device, as long as it improves the cultivation efficiency and usability.

In the plant cultivation device of the present invention, for example, a plant may be any given plant including a vegetable, grain, a bean, a fruit and a decorative plant. In addition, raising the plant may be started in any given state, such as in a state of a seed or sapling, and be completed in any given state.

The plant cultivation device of the present invention may be installed either indoors, such as in a vinyl greenhouse or a building, or outdoors.

In the plant cultivation device of the present invention, a cultivation unit may accommodate a culture medium directly or a container that houses a culture medium.

### Embodiment

One embodiment of the present invention will be described with reference to Figs. 1 to 6.

Referring to Fig. 1, which is a perspective view of an entire plant cultivation device 100 according to the embodiment of the present invention, the plant cultivation device 100 is a multilevel plant cultivation device installed on a flat floor 101 acting as an installed section.

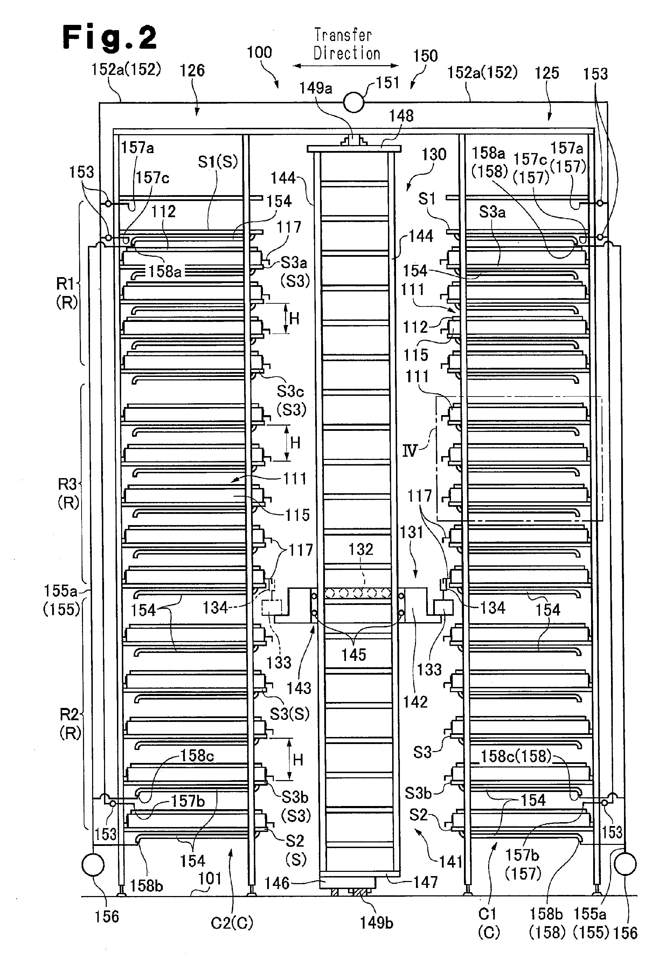

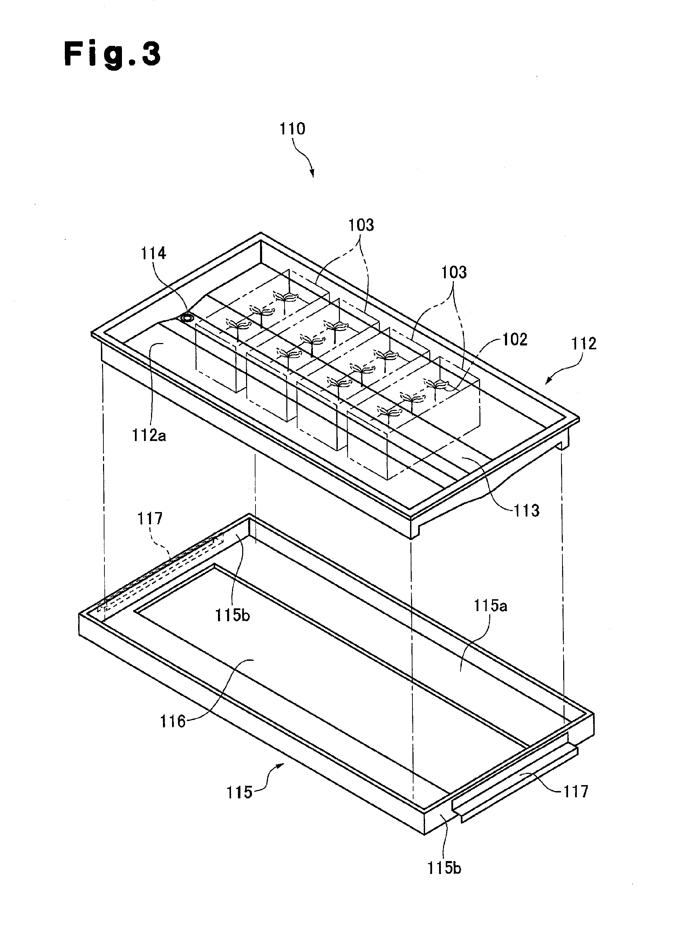

Furthermore, referring to Fig. 2, which is a diagram showing a cultivation storage 121 of the plant cultivation device 100, and Fig. 3, which is an exploded perspective view showing a cultivation unit 110, the plant cultivation device 100 includes a plurality of cultivation units 110 capable of accommodating plants 102 (see Fig. 3) to be cultivated, a rack unit 120 provided with a plurality of cultivation racks S capable of storing the cultivation units 110 that accommodates the plants 102 as culture medium units 111, a conveying device 130 automatically transporting the culture medium units 111 and automatically carrying the culture medium units 111 in or out of any given cultivation racks S, a cultivating environment setting device setting a cultivating environment for raising the plants 102 in the culture medium unit 111 stored on each cultivation rack S (Fig. 2 shows a cultivating water supply device 150 that is one of devices constituting the cultivating environment setting device), and a control device 105 controlling the conveying device 130 and the cultivating environment setting device in accordance with input signals from a control board (not shown) operated by an operator and various sensors (not shown) (Fig. 1 schematically shows the control device 105).

In Figs. 1 and 2, the plants 102 accommodated in each culture medium unit 111 are omitted for avoiding the visual complexity.

The rack unit 120 includes: the cultivation storage 121 including one or more and a predetermined number of, twelve in the present embodiment, cultivation rack rows C; a loading/unloading station 122 as a work station through which the culture medium unit 111 to be loaded into the cultivation storage 121 (namely, the cultivation unit 110 accommodating the plants 102) is transported to the cultivation storage 121 by the conveying device 130 and to which the culture medium unit 111 unloaded from the cultivation storage 121 is transported by the conveying device 130; and a frame body 123 supporting a rack 161 and racks 171, to be described below, of each cultivation rack S and the loading/unloading station 122.

The cultivation storage 121 has one or more and a predetermined number of rack row blocks. In the present embodiment, the cultivation storage 121 has two rack row blocks, or first and second rack row blocks 125 and 126, each of which has the plurality of cultivation racks S.

Each of the rack row blocks 125 and 126 includes one or more cultivation rack rows C. In the present embodiment, each of the rack row blocks 125 and 126 has six cultivation rack rows C.

The cultivating environment setting device includes: the cultivating water supply device 150 supplying a cultivating water to the culture medium unit 111 stored on each cultivation rack S; a light source device (not shown) irradiating the plants 102 with light; and an air conditioning device (not shown) adjusting temperature and moisture and having an air blowing function.

Herein, the cultivating water includes water containing no fertilizer in addition to a culture fluid and refers to a liquid required to raise the plants 102.

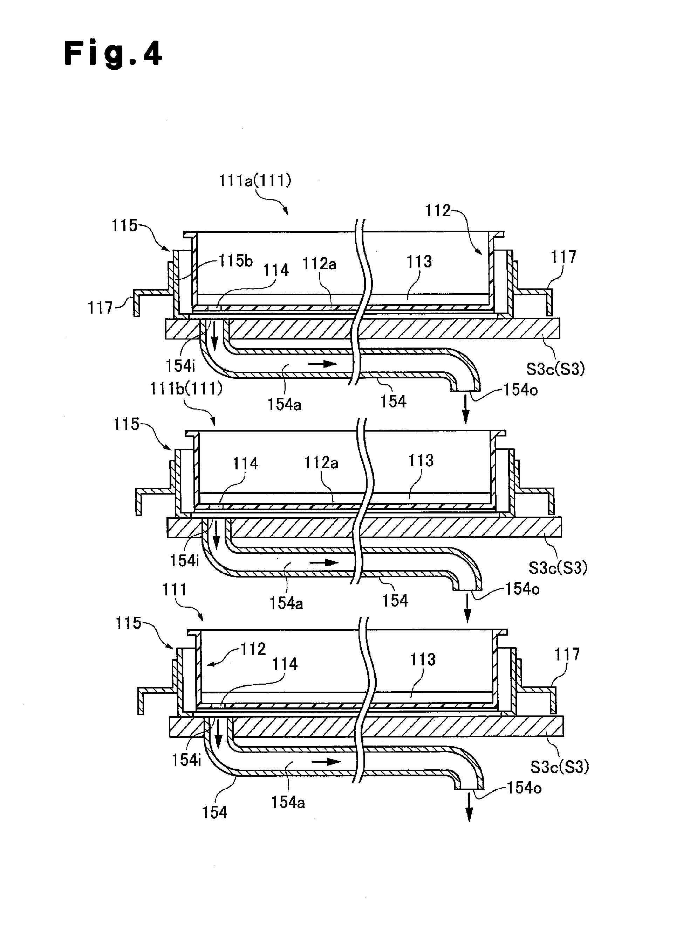

Referring to Fig. 4, which is an enlarged cross-sectional view of a main part of part of Figs. 3 and 2, the cultivation unit 110 includes: a plastic culture medium tray 112 acting as an accommodating member capable of accommodating planters 103, the planters 103 being containers each accommodating a culture medium with the plant 102 planted by a worker; and a metal holding frame 115 acting as a holding member that removably holds the culture medium tray 112 carried by the worker and is handled by the conveying device 130.

The culture medium tray 112, which accommodates and holds the planters 103 as objects-to-be-accommodated, has a bottom wall 112a on which one or more (in the present embodiment, a plurality of) planters 103 are to be placed. The bottom wall 112a is provided with: a conduit channel 113 in which the cultivating water supplied to the culture medium tray 112 flows; and a conduit outlet 114 positioned at the bottom of the conduit channel 113 in order to discharge the cultivating water having flown in the conduit channel 113 to a conduit 154a to be described later.

Accordingly, part of the cultivating water supplied from the cultivating water supply device 150 to the culture medium tray 112 is given to each planter 103, and the excess part thereof flows in the conduit 154a through the conduit channel 113 and the conduit outlet 114 in this order.

The holding frame 115 is a reinforcing member that reinforces the culture medium tray 112 accommodating the planters 103. The holding frame 115 includes: a bottom wall 115a provided with a window 116, the window 116 being opened in a vertical direction in an area containing a site facing the conduit outlet 114 in the vertical direction; and a pair of side walls 115b facing each other in a transfer direction (see Figs. 1 and 2) in which the holding frame 115 is transferred by the conveying device 130 (accordingly, the holding frame 115 may also correspond to the culture medium unit 111). Each side wall 115b is provided with an engaging portion 117 capable of engaging with the conveying device 130.

Referring to Fig. 2, the conveying device 130 includes: a transfer mechanism 131 carrying the culture medium unit 111 and the holding frame 115 in or out of the cultivation rack S; and a transport mechanism 141 transporting the culture medium unit 111 transferred by the transfer mechanism 131 in horizontal and vertical directions in conjunction with the transfer mechanism 131. The transfer mechanism 131 and the transport mechanism 141 automatically operate by being controlled by the control device 105. In the present embodiment, the transport mechanism 141 transports the holding frame 115 in the vertical direction.

The transfer mechanism 131 installed in the transport mechanism 141 includes: a pair of roller rows 132 provided in a transfer rack 142 of the transport mechanism 141, the roller rows 132 being apart from each other in a direction perpendicular to the transfer direction within a planer surface (in a horizontal movement direction to be described, in the present embodiment); a movable body 133 movably provided on the transfer rack 142, the movable body 133 capable of linearly reciprocating in the transfer direction; and an handling section 134 provided in the movable body 133, the handling section 134 capable of engaging with the engaging portion 117 of the holding frame 115 in order to enable the culture medium unit 111 to be carried in or out of the cultivation rack S.

The movable body 133 is driven by a driving member (not shown) and can move between the ends of the transfer rack 142 in the transfer direction. In Fig. 2, the movable body 133 that occupies a first site by being positioned at an end of the transfer rack 142 is indicated by a solid line, and the movable body 133 that occupies a second site by being positioned at the other end of the transfer rack 142 is indicated by a broken line in which a long dash alternates with a pair of short dashes.

The handling section 134 positioned between the pair of the roller rows 132 is a movable engaging portion that can move in the vertical direction with respect to the movable body 133 and between an engaging site at which the handling section 134 engages with the engaging portion 117 by being driven by an actuator (not shown) and a disengagement site, at which the engagement of the handling section 134 with the engaging portion 117 is cancelled.

With the movable body 133 occupying the first site and the handling section 134 engaged with the engaging portion 117, the movable body 133 moves in one of the transfer directions (the left direction in Fig. 2). Then, the movable body 133 carries the culture medium unit 111 out of the cultivation rack S in the first rack row block 125 and transfers it to the transfer rack 142, and in turn carries the culture medium unit 111 placed on the transfer rack 142 in the cultivation rack S of the second rack row block 126 and stores it therein.

Likewise, when the movable body 133 occupies the second site and the handling section 134 is engaged with the engaging portion 117, the movable body 133 moves the other one of the transfer directions (the right direction in Fig. 2). Then, the movable body 133 carries the culture medium unit 111 out of the cultivation rack S in the second rack row block 125 and transfers it to the transfer rack 142, and in turn carries the culture medium unit 111 placed on the transfer rack 142 in the cultivation rack S in the first rack row block 126 and stores it thereon.

The transport mechanism 141 includes: the transfer rack 142 on which the culture medium unit 111 transferred to/from the cultivation racks S by the transfer mechanism 131 is to be placed; an elevating portion 143 moving the transfer rack 142 together with the transfer mechanism 131 in parallel and in the vertical direction; and a horizontal movement section 146 moving the transfer rack 142 and the elevating portion 143 together with the transfer mechanism 131 in the horizontal movement direction, which is a horizontal direction.

The elevating portion 143 includes: four posts 144, each post 144 being an elevating guide member; a chain (not shown) provided so as to extend along each posts 144 in the vertical direction; and sprockets 145 provided in the transfer rack 142, the sprockets 145 mating with the chain. With the rotation of the sprockets 145, which are driven by a rotational driving member (not shown), the transfer rack 142 moves in the vertical direction to be able to stop where the transfer mechanism 131 can carry the culture medium unit 111 in or out of the cultivation rack S.

The horizontal movement section 146 includes: a base 147 supporting the posts 144 in cooperation with a support plate 148, the base 147 being driven by the rotational driving member (not shown); and a guide rail 149 as a guiding portion specifying a horizontal movement pathway that is a moving pathway for the base 147 (accordingly, the transport mechanism 141). The guide rail 149 is configured with a linear first guide rail 149b and second guide rail 149a provided on the floor 101 and the upper part of the frame body 123, respectively. The horizontal movement pathway linearly extends in a direction perpendicular to the transfer direction when viewed in the vertical direction (hereinafter, referred to as a planar view).

Referring to Figs. 1 and 2, each cultivation rack row C in the first rack row block 125 and each cultivation rack row C in the second rack row block 126 are arranged with the guide rail 149 therebetween in the transfer direction, which is a horizontal direction perpendicular to the horizontal movement direction as the moving direction of the transport mechanism 141. Moreover, they are arranged such that each cultivation rack S in the first rack row block 125 and a corresponding cultivation rack S in the second rack row block 126 face each other in the transfer direction and are positioned at the same location on the horizontal movement pathway or in the horizontal movement direction.

The cultivation rack rows C, which configure a single row, each include a plurality of and a predetermined number of, actually four or more, namely, fifteen in the present embodiment, cultivation racks S arranged in the vertical direction in a multistage fashion, and the cultivation rack rows C have the same structure. Accordingly, the cultivation rack row C, which is a single row in the cultivation storage 121, is configured with the predetermined number of, namely, fifteen racks. The respective cultivation racks S having the same ordinal level in the cultivation rack rows C are positioned at the same location in the vertical direction.

To give another example, the cultivation racks S constituting the single cultivation rack row C may differ from one another in number, among the plurality of cultivation rack rows C.

Each cultivation rack row C includes: an uppermost cultivation rack S1 positioned uppermost; a lowermost cultivation rack S2 positioned lowermost; and one or more, thirteen in the present embodiment, middle cultivation racks S3, which are middle racks between the uppermost cultivation rack S1 and the lowermost cultivation rack S2.

The middle cultivation racks S3 are composed of: an upper-part middle cultivation rack S3a directly below the uppermost cultivation rack S1; a lower-part middle cultivation rack S3b directly above the lowermost cultivation rack S2; and middle-part middle cultivation racks S3c between the upper-part middle cultivation rack S3a and the lower-part middle cultivation rack S3b.

In each cultivation rack row C, the uppermost cultivation rack S1 is a cultivation rack intended for starting cultivation or an a cultivation rack intended for loading, on which the culture medium unit 111 is to be stored first, immediately after being carried in (namely, loaded onto) the cultivation storage 121 from the loading/unloading station 122. The lowermost cultivation rack S2 is a cultivation rack intended for harvest or a cultivation rack intended for unloading, on which the culture medium unit 111 is to be stored immediately before being carried out of (namely, unloaded from) the cultivation storage 121 to the loading/unloading station 122.

All the cultivation racks S in each cultivation rack row C are separated into a plurality of regions R within an area from the uppermost cultivation rack S1 to the lowermost cultivation rack S2, each region R containing a preset number, which is one or a greater number, of cultivation racks S. In addition, each region R is configured by the cultivation racks S having different rack heights H.

In the present embodiment, each cultivation rack row C is separated into a plurality of, or three, regions R, more specifically, an uppermost region R1 positioned uppermost, a lowermost region R2 positioned lowermost, and a middle region R3 between the uppermost region R1 and the lowermost region R2.

The regions R1 to R3 have the same number of racks, and each of them contains a plurality of, or five, cultivation racks S.

Each cultivation rack row C is composed of cultivation racks S of which the rack height H differs in multiple steps.

More specifically, the rack height H in each of the regions R1 to R3 tends to become larger from the uppermost region R1, which contains the uppermost cultivation rack S1, toward the lowermost region R2, which contains the lowermost cultivation rack S2. The rack height H of each cultivation rack S tends to become larger from the uppermost region R1 toward the lowermost region R2.

Therefore, the lower the location of a region R, the greater the rack height H of the cultivation rack S contained therein becomes, and the lowermost cultivation rack S2 has the larger rack height H than the uppermost cultivation rack S1.

In each of the regions R1 to R3, the height of the cultivation rack S positioned uppermost is set larger than the rack heights H of the other cultivation racks S, in order to easily identify the border between the regions R1 and R2 or between R2 and R3 arranged adjacent to one another in the vertical direction. To give another example, all the cultivation racks S contained in each of the regions R1 to R3 may have the same rack height H.

As the planted plants 102 are growing up and becoming taller in the culture medium unit 111, its culture medium unit 111 is conveyed to the cultivation rack S having the larger rack height H, namely, the cultivation rack S positioned at a lower location by the conveying device 130.

Referring to Figs. 2 and 4, which schematically show the cultivating water supply device 150, the cultivating water supply device 150, which supplies the cultivating water to the culture medium unit 111 stored on each cultivation rack S, includes: a cultivating water supply source 151; water supply pipes 152 forming water supply paths 152a for guiding the cultivating water from a cultivating water supply source 151 to the culture medium units 111; water supply adjusting valves 153 provided in the water supply paths 152a, the water supply adjusting valves 153 supplying the cultivating water or stop supplying it by being controlled by the control device 105; conduit pipes 154 forming the conduits 154a; water discharge pipes 155 forming water discharge paths 155a, the water discharge paths 155a discharging excess cultivating water from the culture medium units 111; and drains 156 to which the excess cultivating water is guided through the water discharge paths 155a.

The cultivating water flows in the conduit 154a provided in each cultivation rack S from the conduit outlet 114 of the culture medium tray 112 in the cultivation unit 110. In all the conduits 154a, inlets 154i and outlet 154o are arranged so as to be overlaid with one another in a plan view.

In the cultivating water supply device 150, the cultivating water is supplied from water inlets 157 of the water supply path 152a to the culture medium trays 112 of culture medium units 111 stored on specific cultivation racks, which are the uppermost cultivation rack S1, the lowermost cultivation rack S2, and the upper-part middle cultivation rack S3a in each cultivation rack row C. In addition, the excess cultivating water is discharged from the culture medium trays 112 of the culture medium units 111 in the uppermost cultivation rack S1, the lowermost cultivation rack S2, and the lower-part middle cultivation racks S3b as a specific cultivation rack to the drain 156 through the water outlet 158 of the water discharge path 155a.

In Figs. 1 and 2, a state where each uppermost cultivation rack S1 does not contain the culture medium unit 11 is shown.

Specifically, the uppermost cultivation rack S1 is provided with: a water inlet 157a as a first water inlet to which the cultivating water flows from the water supply path 152a; and a water outlet 158a as a first water outlet from which excess part of the cultivating water supplied from the water inlet 157a is discharged. The water outlet 158a is the outlet 154o of the conduit 154 as a first conduit provided in the uppermost cultivation rack S1.

The lowermost cultivation rack S2 is provided with: a water inlet 157b as a second water inlet to which the cultivating water flows from the water supply path 152a; and a water outlet 158b as a second water outlet from which excess part of the cultivating water supplied from the water inlet 157b is discharged. The water outlet 158b is the outlet 154o of the conduit 154a as a second conduit provided in the lowermost cultivation rack S2.

Among the middle cultivation racks S3, the upper-part middle cultivation rack S3a is not provided with the water outlet 158 communicating with the drain 156 but only the water inlet 157c as a third water inlet. The lower-part middle cultivation rack S3b is not provided with the water inlet 157 that communicates with the water supply path 152a but only the water outlet 158c as a third water outlet. Through the water outlet 158c, the cultivating water, which has sequentially flowed through the conduits 154a of the middle-part middle cultivation racks S3c arranged between the upper-part middle cultivation rack S3a and the lower-part middle cultivation racks S3b in a vertical direction from the upper rack to the lower rack, flows into the water discharge path 155a. The water outlet 158c is the outlet 154o of the conduit 154a as a third conduit provided in the lower-part middle cultivation rack S3b.

With the conduits 154a provided in the middle cultivation racks S3 as the middle conduits, with regard to the middle cultivation racks S3, which are the cultivation racks S arranged adjacent to each other in the vertical direction, the excess part of the cultivating water supplied to an upper-side culture medium unit 111 stored on the middle cultivation rack S3 positioned at an upper location (e.g. the culture medium unit 111a of Fig. 4) is guided from the upper-side culture medium unit 111 to a lower-side culture medium unit 111 stored on the middle cultivation rack S3 positioned at a lower location (e.g. the culture medium unit 111 b).

Furthermore, the outlets 154o of all the conduits 154a are arranged so as to be overlaid with one another in a plan view. With this arrangement, even when at least one of the middle cultivation racks S3 does not store the culture medium unit 111, the water is supplied from the outlet 154o to the middle cultivation rack S3 positioned at lower locations by skipping the middle cultivation rack S3 that does not store the culture medium unit 111.

Therefore, the cultivating water is supplied to the upper-part middle cultivation rack S3a, which is the second cultivation rack from the top, through the water inlet 157. Then, the cultivating water sequentially and continuously flows from the upper-part middle cultivation rack S3a to the middle-part middle cultivation racks S3c through the conduits 154a in a downward direction. Finally, after the cultivating water reaches the lower-part middle cultivation rack S3b, which is the second cultivation rack from the bottom, it is discharged through the water outlet 158c.

Referring to Figs. 1 and 2, the loading/unloading station 122 includes: an loading/unloading section 160 constituting an loading section, in which the culture medium unit 111 that has been transported by the transport mechanism 141 and is to be loaded onto the cultivation storage 121 is placed, and an unloading section, in which the culture medium unit 111 has been unloaded from the cultivation storage 121 by the conveying device 130; and at least one (one in the present embodiment) stock rack row 170 as a stock section, in which the holding frames 115 of the cultivation units 110 accommodating no plants 102 are stored as empty units to be able to be carried by the transfer mechanism 131 of the conveying device 130.

The loading/unloading section 160 and the stock rack row 170 are arranged so as to face each other with the horizontal movement pathway therebetween in the transfer direction, and are positioned at the same location on the horizontal movement pathway or in each horizontal movement direction.

The loading/unloading station 122, namely, the loading/unloading section 160 and the stock rack row 170 are provided adjacent to the cultivation storage 121 in the horizontal movement direction of the transport mechanism 141 while being integrated with the cultivation storage 121.

More specifically, the location of the loading/unloading station 122 relative to the cultivation storage 121 is determined such that the loading/unloading station 122 can carry the culture medium unit 111 or the holding frame 115 in or out of the loading/unloading section 160 and the stock rack row 170, when the loading/unloading station 122 moves on the horizontal movement path, relative to the cultivation rack rows C1 and C2, which are specific cultivation rack rows positioned adjacent to the loading/unloading station 122, by a distance that is the same as that in which the transport mechanism 141 moves on the horizontal movement pathway and between the adjacent cultivation rack rows C in each of the rack row blocks 125 and 126. In other words, the loading/unloading station 122 is positioned adjacent to the cultivation storage 121 in the horizontal movement direction at an interval that is the same as that between the adjacent cultivation rack rows C in the horizontal movement direction.

The loading/unloading section 160 is arranged adjacent to the second rack row block 126 in the horizontal movement direction, the second rack row block 126 being one of the rack row blocks 125 and 126. In addition, the loading/unloading section 160 is arranged adjacent to the cultivation rack row C2 positioned at an end of the second rack row block 126 and is integrated with the above cultivation rack row C2.

The stock rack row 170 is arranged adjacent to the first rack row block 125 in the horizontal movement direction, the first rack row block 125 being the other one of the rack row blocks 125 and 126. In addition, the stock rack row 170 is arranged adjacent to the cultivation rack row C1 as a specific cultivation row rack positioned at an end of the first rack row block 125 and is integrated with the above cultivation rack row C1.

Therefore, the conveying device 130 carries the culture medium unit 111 and the holding frame 115 in or out of the loading/unloading station 122 with a transport mode and a carry-in/out mode that are the same as the aspect of horizontally and vertically transporting the culture medium unit 111 to the cultivation storage 121 and the mode of carrying the culture medium unit 111 in or out of the cultivation rack S, respectively.

The loading/unloading section 160 includes at least one (one in the present embodiment) transfer track, which is a loading/unloading rack 161 arranged in the vertical direction.

The loading/unloading rack 161 is a loading rack on which the culture medium unit 111 that has been conveyed and is to be carried in the cultivation storage 121 by the conveying device 130 is placed. Also, the loading/unloading rack 161 is an unloading rack on which the culture medium unit 111 that has been carried out of the cultivation storage 121 by being conveyed by the conveying device 130 is placed.

With regard to all the cultivation racks S in each cultivation rack row C, the loading/unloading rack 161 is positioned closer to the lowermost cultivation rack S2 than the uppermost cultivation rack S1 and the middle cultivation racks S3. In addition, the loading/unloading rack 161 is positioned closest to the lowermost cultivation rack S2 contained in the lower region R2, and closest to the lowermost region R2 among the predetermined number of regions R1 to R3.

The stock rack row 170 includes stock racks 171, the number of which is equal to or more than that of the cultivation rack rows C constituting the cultivation storage 121. The number of stock racks 171 is twelve, which is equal to the predetermined number of the cultivation rack rows C in this embodiment.

A lowermost stock rack 171 is positioned at the same height as the lowermost cultivation rack S2 in the cultivation rack row C in the vertical direction, and an uppermost stock rack 171 is positioned at the same height as one of the middle cultivation racks S3 in the cultivation rack row C that is the cultivation rack S having the same ordinal level. The heights of the stock racks 171 are the same as those of the cultivation racks S having the same ordinal level in the cultivation rack row C, and differ depending on their vertical locations.

To give another example, the heights of all the stock racks 171 may be the same as one another, and the height of at least one of the stock racks 171 may differ from the rack height H of the cultivation racks S.

The culture medium unit 111 is carried out of the cultivation rack S, and is placed on the loading/unloading rack 161. Then, the culture medium tray 112 accommodating the planters 103 is removed from the culture medium unit 111. Subsequently, the remaining holding frame 115 is transferred from the loading/unloading rack 161 positioned at the same location as the lowermost stock rack 171 in the vertical direction to the stock rack 171 by the transfer mechanism 131, and is stored thereon as an empty unit.

The stock rack 171 is not provided with the cultivating environment setting device including the cultivating water supply device 150, which is required for the cultivation rack S.

When the transport mechanism 141 occupies a loading/unloading site P (see Fig. 5) on the horizontal movement pathway, the holding frame 115 that has been transferred from the stock rack 171 by the transfer mechanism 131 is placed on the loading/unloading rack 161 by the transfer mechanism 131.

Then, the culture medium tray 112 accommodating the planters 103 (see Fig. 3) in which the plants 102 are planted by the worker is held by the holding frame 115 placed on the loading/unloading rack 161. As a result, the culture medium unit 111 is obtained.

When the transport mechanism 141 occupies the loading/unloading site P (see Fig. 6), after the culture medium unit 111 that has been transported from the cultivation storage 121 is placed on the loading/unloading rack 161 by the transfer mechanism 131, the remaining holding frame 115 from which the culture medium tray 112 has been removed for the purpose of harvest is transported from the loading/unloading rack 161 by the transfer mechanism 131, and is placed on the stock rack 171.

In this way, the loading/unloading site P becomes a loading site as well as an unloading site.

Next, with reference to mainly Figs. 5 and 6, which describe loading/unloading steps for the cultivation storage 121 of the plant cultivation device 100, and to Figs. 1 and 2 as necessary, a description will be given of a loading step of creating the culture medium unit 111 from the holding frame 115 stored on the stock rack 171 and loading the created culture medium unit 111 onto the cultivation storage 121, and a method of storing the culture medium unit in the plant cultivation device, including an unloading step of unloading the culture medium unit 111 from the cultivation storage 121.

In Figs. 5 and 6, the plant cultivation device 100 is partially removed and is simplified, for the sake of avoiding the visual complexity.

As shown in Fig. 1, the holding frames 115 are kept in the stock rack row 170, whereas the holding frames 115 for creating the culture medium units 111 to be stored on the uppermost cultivation racks S1 of the cultivation rack rows C in the first rack row block 125 and the second rack row block 126 are stored on the stock racks 171.

Referring to Fig. 5A, in a loading preparation step for preparing the culture medium unit 111 to be loaded onto the cultivation storage 121, a moving rack 142 and the transfer mechanism 130 of the transport mechanism 141 (see Fig. 2) that have moved along the guide rail 149 occupy the loading/unloading site P on the horizontal movement pathway between the loading/unloading section 160 and the stock rack row 170.

At the loading/unloading site P, the movable body 133 of the transfer mechanism 130, which is positioned at a location indicated by a solid line of Fig. 2, carries the single holding frame 115 (namely, an empty frame) out of the lowermost stock rack 171 in the stock rack row 170, and transports it to the transfer rack 142 toward the loading/unloading rack 161. Then, the movable body 133 moves toward the loading/unloading rack 161 in the transfer direction (in the left direction in Fig. 2). As a result, after the entire holding frame 115 is placed on the transfer rack 142 at a predetermined location, the handling section 134 moves below the holding frame 115 on the transfer rack 142 and occupies the disengagement site. Subsequently, after moving toward the stock rack row 170 (in the right direction in Fig. 2) by a predetermined distance, the movable body 133 stops. At this location, the handling section 134 moves upward to occupy the engaging site at which it engages with the engaging portion 117.

Then, the movable body 134 moves toward the loading/unloading rack 161 with the handling section 134 and the engaging portion 117 engaged with each other. Subsequently, the transfer mechanism 131 carries the holding frame 115 in the loading/unloading rack 161 from the transfer rack 142. As a result, the holding frame 115 is placed on the loading/unloading rack 161 (see Fig. 5B).

After that, the culture medium tray 112 that accommodates the planters 103 (see Fig. 3) in which the plants 102 have been planted by the worker is put in the holding frame 115 placed on the loading/unloading rack 161. The culture medium tray 112 is accommodated in the holding frame 115, so that the culture medium unit 111 is created in the loading/unloading section 160 (see Fig. 5C).

After the loading preparation step, including the series of steps described above, is completed, at the loading step, with the transport mechanism 141 occupying the loading/unloading site P, the transfer mechanism 131 carries the culture medium unit 111 out of the loading/unloading section 160, and transports it to a predetermined location on the transfer rack 142. Then, the transport mechanism 141 moves on the horizontal movement pathway and along the guide rail 149, and stops at a storing site corresponding to the cultivation rack row C in the horizontal movement direction, which is included in the first rack row block 125 in which the culture medium unit 111 is to be stored.

After that, the transfer rack 142 is moved upward to a location of the uppermost cultivation rack S1 in the vertical direction by the elevating portion 143 (see Fig. 2), and is stopped. The transfer mechanism 131 carries the culture medium unit 111 in the uppermost cultivation rack S1 from the transfer rack 142, so that the culture medium unit 111 is stored on the uppermost cultivation rack S1 (see Fig. 5D).

The storing site on the horizontal movement pathway is equally applied to both the cultivation racks S in the first rack row block 125 and the second rack row block 126, which face each other in the transfer direction.

After that, the above loading preparation step and loading step are repeated, whereby the holding frames 115 stored on the stock racks 171 are sequentially carried out of the stock racks 171 in order from the lower rack. Then, the holding frames 115 are made the culture medium units 111 on the loading/unloading rack 161, and are conveyed from the loading/unloading section 160 by the transport mechanism 141 and the transfer mechanism 131. Subsequently, the culture medium units 111 are sequentially stored on the uppermost cultivation racks S1 of the first rack row block 125, so that they are loaded. After that, similar to the first rack row block 125, the culture medium units 111 that have been created from all the holding frames 115 in the stock rack row 170 are stored on the uppermost cultivation racks S1 of the cultivation rack rows C in the second rack row block 126 (see Fig. 6A).

Next, the unloading step will be described. A culture medium block 111 that has been stored on the lowermost cultivation rack S2 of the first rack row block 125 is carried out of the lowermost cultivation rack S2 and transferred to the transfer rack 142 by the transfer mechanism 131. Then, the culture medium unit 111 is transported to the loading/unloading site P along the horizontal movement pathway by the transport mechanism 141. At the loading/unloading site P, the culture medium unit 111 is transferred from the transfer rack 142 to the loading/unloading section 160 by the transfer mechanism 131 and is placed thereon (see Fig. 6A).

Then, the worker extracts only the culture medium tray 112 from the culture medium unit 111 in the loading/unloading section 160. As a result, only the holding frame 115 of the cultivation unit 110 is left on the loading/unloading rack 161 (see Fig. 6B).

After that, at the loading/unloading site P, the holding frame 115 is carried out of the loading/unloading rack 161 and transferred to the transfer rack 142 by the transfer mechanism 131. Then, the holding frame 115 is carried in a predetermined one of the stock racks 171 in the stock rack row 170 positioned on the opposite side of the loading/unloading rack 161 in the transfer direction with the transfer rack 142 there between, and stored on the stock rack 171 (see Fig. 6C).

Similar to the above step, then, the culture medium units 111 are sequentially carried out of the lowermost cultivation racks S2 of the remaining cultivation rack rows C in the first rack row block 125. Subsequently, the culture medium units 111 are sequentially carried out of the lowermost cultivation racks S2 of the cultivation rack rows C in the second rack row block 126. The holding frames 115 of the culture medium units 111 that have been stored on the lowermost cultivation racks S2 of the cultivation storage 121 are stored on the stock racks 171 of the stock rack row 170 (see Fig. 6D).

At a shifting step for the culture medium unit 111 after the above unloading step is completed, in the plant cultivation device 100 in a state shown in Fig. 6D, the culture medium units 111 (see Figs. 1 and 2) that have been stored on the lower-part middle cultivation racks S3b in each of the rack row blocks 125 and 126 are carried out of the lower-part middle cultivation racks S3b one by one and carried in the lowermost cultivation racks S2 one by one, by the transfer mechanism 131 and the transport mechanism 141.

Likewise, the culture medium units 111 that have been stored on the cultivation racks S positioned higher than the lower-part middle cultivation racks S3b are sequentially transferred to the next cultivation racks S below by the transfer mechanism 131 and the transport mechanism 141.

Next, a description will be given of operation and advantage of the present embodiment configured above.

The plant cultivation device 100 includes: the rack unit 120 including the cultivation racks S in which the cultivation units 110 accommodating the plants 102 are stored as the culture medium units 111; and the conveying device 130 moving on the horizontal movement pathway, the conveying device 130 transporting the culture medium units 111, and carrying the culture medium units 111 in or out of the cultivation racks S. Further, the plurality of cultivation racks S arranged in the vertical direction in a multistage fashion constitutes the single cultivation rack row C.

With this configuration, the plurality of cultivation racks S storing the culture medium units 111 constitutes the vertical multistage cultivation rack row C. Therefore, the plant cultivation device 100 can increase the production number of the plants 102 to be cultivated while maintaining its compactness in the horizontal direction, by increasing the number of cultivation racks S through the use of the vertical space.

The rack unit 120 includes: the cultivation storage 121 including cultivation rack rows C; and the loading/unloading station 122 having the stock rack row 170 in which the holding frames 115 of the cultivation unit 110 accommodating no plants 102 are stored as empty units. Further, the conveying device 130 carries the holding frames 115 in or out of the stock rack row 170.

With this configuration, the stock rack section 170 that stores the holding frames 115 with no plants 102 planted, for example, after the grown plants 102 are harvested, is built into the plant cultivation device 100 as part of the rack unit 120 that includes the cultivation storage 121 storing the culture medium units 111 with the plants 102 planted. Therefore, the need to transport the holding frames 115 to the exterior of the plant cultivation device 100 is eliminated, and the working efficiency of transporting the holding frames 115 in order to obtain the culture medium units 111 is improved. Consequently, the plant cultivation device 100 can operate with the high storage efficiency in the cultivation storage 121, thereby improving the cultivation efficiency of the plant cultivation device 100.

Moreover, the holding frames 115 are transported to the stock rack row 170 through the use of the conveying device 130 that transfers the culture medium units 111 between the cultivation racks S in the cultivation storage 121 and carries the culture medium units 111 in or out of the cultivation racks S. Therefore, a dedicated conveying device for carrying the holding frame 115 in or out of the stock rack row 170 is unnecessary, so that the cost of the plant cultivation device 100 is reduced. Furthermore, the holding frames 115 are carried in or out of the stock rack row 170 through a carry-in/out mode that is the same as that for carrying the culture medium units 111 in or out of the cultivation racks S. It is thus possible to improve the usability of the plant cultivation device 100 and to simplify the structure of the conveying device 130, thereby reducing the cost of the plant cultivation device 100.

Since the stock rack row 170 is configured with the stock racks 171, the number of which is equal to the cultivation rack rows C that the cultivation storage 121 has. Therefore, the stock rack row 170 reserves at least one of the stock racks 171 storing the holding frames 115, for each of all the cultivation rack rows C in the cultivation storage 121. It is thus possible to improve the working efficiency of transporting the holding frames 115 and the culture medium units 111 for each cultivation rack row C, thereby improving the cultivation efficiency.

The stock rack row 170 and the loading/unloading section 160 are arranged adjacent to the specific cultivation rack rows C1 and C2, respectively, as the specific cultivation racks of the cultivation storage 121, and are integrated with the specific cultivation rack row C1 and C2, respectively. This reduces the size of the cultivation storage 121 having the cultivation rack rows C, and the loading/unloading station 122 having the stock racks 171 and the loading/unloading section 160. Therefore, the plant cultivation device 100 can be made compact.

The loading/unloading station 122 has the loading/unloading rack 161 on which the culture medium unit 111 to be carried in the cultivation rack S of the cultivation storage 121 is placed by the conveying device 130 stopping at the loading/unloading site P on the horizontal movement pathway. In addition, the stock racks 171 in the stock rack row 170 are positioned such that the conveying device 130 can carry the holding frame 115 out of the stock rack 171 and carry it in the loading/unloading rack 161, without moving on the horizontal movement pathway from the loading/unloading site P.

With this configuration, when the culture medium tray 112 accommodating the plants 102 is supported by the holding frame 115 and the holding frame 115 is carried out of the stock rack 171 by the conveying device 130 in order to change the cultivation unit 110 from the holding frame 115 into the culture medium unit 111, the conveying device 130 can carry the holding frame 115 out of the stock racks 171, without moving on the horizontal movement pathway from the loading/unloading site P. As a result, the time of transporting the holding frame 115 in order to obtain the culture medium unit 111 is shortened, so that the working efficiency of transporting the holding frame 115 is improved. Therefore, the time of transporting the culture medium unit 111, obtained from the holding frame 115, to the cultivation rack S is shortened, so that the usability of the plant cultivation device 100 is improved.

The cultivation unit 110 includes: the culture medium tray 112 accommodating planters 103 with plants 102 planted; and the holding frame 115 removably holding the culture medium tray 112, the holding frame 115 being handled by the transfer mechanism 131 of the conveying device 130. Increasing the strength of the holding frame 115 handled by the transfer mechanism 131 reliably facilitates the handling of the culture medium unit 111 with the conveying device 130. In addition, since the holding frame 115 acts as a reinforcing member that reinforces the culture medium tray 112 accommodating the plants 102, the weight of the culture medium tray 112 can be reduced. Therefore, when the plants 102 are carried out of the plant cultivation device 100, only the culture medium tray 112 accommodating the plants 102 can be extracted from the culture medium unit 111 and transported. Consequently, it is possible to ease the work for transporting the culture medium tray 112 accommodating the plants 102 when the plants 102 are carried out of the plant cultivation device 100.

The empty unit kept in the stock rack row 170 corresponds to the holding frame 115 that assumes a state where the culture medium tray 112 is removed from the cultivation unit 110. Accordingly, the holding frame 115 from which the culture medium tray 112 is removed is left in the plant cultivation device 100, for example, by being kept in the stock rack row 170 as the empty unit. It is thus possible to create the culture medium unit 111 easily by combining the holding frame 115 with the culture medium tray 112 that accommodates the plants 102 of which the cultivation has been started.

Each cultivation rack row C includes: the uppermost cultivation rack S1, on which the culture medium unit 111 is stored immediately after it is loaded onto the cultivation storage 121 by the conveying device 130; and the lowermost cultivation rack S2, on which the culture medium unit 111 is stored immediately before it is unloaded from the cultivation storage 121 by the conveying device 130. The loading/unloading station 122 includes the loading/unloading section 160 on which the culture medium unit 111 carried out of the lowermost cultivation rack S2 is placed, and the loading/unloading section 160 is positioned closer to the lowermost cultivation rack S2 than the uppermost cultivation rack S1.

With this configuration, with regard to the cultivation racks S in the cultivation rack row C, the distance between the loading/unloading section 160 and the lowermost cultivation rack S2 is made shorter than the distance between the loading/unloading section 160 and the uppermost cultivation rack S1. This shortens the time is shortened during which the culture medium unit 111 carried out of the cultivation storage 121, or the culture medium unit 111 accommodating the plants 102 of which the cultivation has been finished in the plant cultivation device 100 and harvest period comes, are transported to the loading/unloading section 160. It is thus possible to improve the working efficiency of transporting the culture medium unit 111 in order to unload it, thereby improving the usability of the plant cultivation device 100.

All the cultivation racks S in the cultivation rack row C are separated into the plurality of regions R; the cultivation rack S contained in a lower one of the regions R has the larger rack height H than that contained in an upper one thereof has. The loading/unloading station 122 has the loading/unloading section 160 in which the culture medium unit 111 is placed by the conveying device 130 after being carried out of the lowermost cultivation rack S2 in the lowermost region R2 and transported by the conveying device 130. The loading/unloading section 160 is positioned closest to the lowermost region R2 among the regions R1 to R3.

With this configuration, with regard to the cultivation racks S in the cultivation rack row C, the distance between the loading/unloading section 160 and the lowermost region R2 is made shorter than the distance between the loading/unloading section 160 and any of the regions R1 and R3 excluding the lowermost region R2. This shortens the time during which the culture medium unit 111 unloaded from the cultivation storage 121, or the culture medium unit 111 accommodating the plants 102 that have grown up and become tall, is transported to the loading/unloading section 160. It is thus possible to improve the working efficiency of transporting the culture medium unit 111 in order to unload it, thereby improving the usability of the plant cultivation device 100.

Each cultivation rack row C is provided with the conduits 154a. Through the conduits 154a, excess part of the cultivating water supplied to the upper-side culture medium unit 111 a stored on the upper one of the middle cultivation racks S3 arranged adjacent to one another in the vertical direction guided from the upper-side culture medium unit 111 a to the lower-side culture medium unit 111b stored on another one of the middle cultivation racks S3 that is positioned at the lower side.

With this configuration, the excess part of the cultivating water supplied to the upper-side culture medium unit 111 a is supplied to the lower-side culture medium unit 111 b through the conduits 154a. Therefore, the supply system and the discharge system for the cultivating water becomes simpler in structure (e.g. piping) than that for independently supplying or discharging the cultivating water to or from each of the culture medium units 111. It is thus possible to make the plant cultivation device 100 compact, thereby reducing the cost of the plant cultivation device 100.

All the cultivation racks S in each cultivation rack row C are separated into the uppermost cultivation rack S1, the lowermost cultivation rack S2, and the plurality of middle cultivation racks S3. The uppermost cultivation rack S1 is provided with: the water inlet 157a, to which the cultivating water is supplied from the cultivating water supply source 151; and the water outlet 158a, from which the excess cultivating water is discharged to the drain 156. The lowermost cultivation rack S2 is provided with: the second water inlet 157b to which the cultivating water is supplied from the cultivating water supply source 151; and the second water outlet 158b, from which the excess cultivating water is discharged to the drain 156. Of the middle cultivation racks S3, the upper-part middle cultivation rack S3a is provided with the third water inlet 157c, to which the cultivating water is supplied from the cultivating water supply source 151, and the lower-part middle cultivation rack S3b directly above the lowermost cultivation rack S2 is provided with the water outlet 158c, from which the excess cultivating water is discharged to the drain 156. Each of the middle cultivation racks S3 arranged adjacent to one another in the vertical direction is provided with the conduit 154a. The conduit 154a guides the cultivating water supplied to the upper-side culture medium unit 111 stored on one of the middle cultivation racks S3 that is positioned on an upper side to the lower-side culture medium unit 111 stored on another one of the middle cultivation racks S3 which is positioned on a lower side. The cultivating water is sequentially guided from the water inlet 157c to the lower-side culture medium units 111 on the lower side through the conduits 154a. After being supplied to the culture medium unit 111 stored on the lower-part middle cultivation rack S3, the cultivating water is discharged from the water outlet 158c.

With this configuration, in each cultivation rack row C, the supply and discharge of the cultivating water for each of the three parts, or the uppermost cultivation rack S1, the lowermost cultivation rack S2 and the middle cultivation racks S3, can be controlled independently of one another. Therefore, when the culture medium unit 111 is being carried in or out of each cultivation rack S, an area in which the supply of the cultivating water is stopped can be limited. It is thus possible to improve the cultivation efficiency of the plant cultivation device 100 while maintaining the simple structure of the cultivating water supply device 150.

Furthermore, the uppermost cultivation rack S1 serves as a cultivation rack intended for loading, on which the culture medium unit 111 is stored immediately after it is loaded onto the cultivation storage 121, and the lowermost cultivation rack S2 serves as a cultivation rack intended for unloading, on which the culture medium unit 111 is stored immediately before it is unloaded from the cultivation storage 121. A longer time is required to move the culture medium unit 111 to the uppermost cultivation rack S1 or the lowermost cultivation rack S2 than to shift the culture medium unit 111 between the middle cultivation racks S3. Accordingly, the respective cultivating water supply systems for the uppermost cultivation rack S1 and the lowermost cultivation rack S2, each of which stops supplying the cultivating water for a long time, are provided independently of the cultivating water supply system for the middle cultivation racks S3. This makes it possible to further improve the cultivation efficiency of the plant cultivation device 100.

Hereinafter, as for an embodiment made by partially modifying the configuration of the embodiment described above, the modified configuration will be described.

The culture medium unit 111 may be stored on the cultivation rack S having the suitable rack height H in accordance with the growing period or type of the accommodated plants 102, as well as in accordance with the changed height of the grown plants 102.

All the cultivation racks S constituting the cultivation rack row C may have the same rack height H.

The plurality of rack row blocks may differ from one another in the number of cultivation rack rows C.

The cultivation unit may be a single integral member that can accommodate the planters 103 and engage with the transfer mechanism 131, instead of a separable member that can be split into the culture medium tray 112 and the holding frame 115.

The culture medium tray 112 may directly accommodate the culture medium as an accommodated object.

In the loading/unloading station 122, the loading/unloading section 160 may be composed of the two or three or more, or the plurality of loading/unloading racks 161 arranged in the vertical direction. In addition, each of the loading/unloading sections 160 and the stock racks 171 may be arranged in multiple rows on the horizontal movement pathway in the horizontal direction. Furthermore, a loading rack and an unloading rack may be configured in the form of separated racks or rows.

The conduit 154a is composed of the conduit pipe 154, which is a member separated from the culture medium tray 112. However it may be formed by integrally molding the conduit pipe and the culture medium tray 112 or be provided in the culture medium tray 112.

In the cultivation rack row C, the cultivation rack intended for loading may be any cultivation rack S other than the uppermost cultivation rack S1, and the cultivation rack intended for unloading may be any cultivation rack S other than the lowermost cultivation rack S2.

The cultivating water supply source 151 may be an assembly composed of a plurality of cultivating water supply sources that independently supply the cultivating water to the plurality of culture medium units 111. Likewise, the drain 156 may be an assembly composed of a plurality of drains to which the excess cultivating water is independently guided from the plurality of culture medium units 111.

### Description of the Reference Numerals

- 100: plant cultivation device
- 102: plant
- 110: cultivation unit
- 111: culture medium unit
- 112: culture medium tray
- 115: holding frame
- 120: rack unit
- 121: cultivation storage
- 122: loading/unloading station
- 125, 126: rack row block
- 130: conveying device
- 131: transfer mechanism
- 141: transport mechanism
- 150: cultivating water supply device
- 154a: conduit
- 157: water inlet
- 158: water outlet
- 160: loading/unloading section
- 161: loading/unloading rack
- 170: stock rack row
- 171: stock rack
- S, S1, S2, S3: cultivation rack
- C: cultivation rack row
- R: region
- P: loading/unloading site
- H: rack height

## Claims

1. A plant cultivation device comprising:
a plurality of cultivation units capable of accommodating plants to be cultivated;
a rack unit including a plurality of cultivation racks, wherein the cultivation racks store the cultivation units as culture medium units, and the cultivation units accommodate the plants; and
a conveying device that moves on a moving pathway, wherein the conveying device transports the culture medium units, and the conveying device carries the culture medium units in or out of the cultivation racks, wherein
a predetermined number of the cultivation racks are arranged in a vertical direction in a multistage fashion to form a single cultivation rack row,
the plant cultivation device is **characterized in that**
the rack unit includes a cultivation storage and a work station,
the cultivation storage includes a predetermined number of cultivation rack rows, the predetermined number being one or a greater number,
the work station includes a stock section, and the stock section stores the cultivation units that accommodate no plants as empty units, and
the conveying device carries the empty units in or out of the stock section.

2. The plant cultivation device according to claim 1 **characterized in that**
the stock section is a stock rack row, and the stock rack row includes the predetermined number or more of stock racks arranged in the vertical direction in a multistage fashion, and
the stock rack row is arranged adjacent to specific cultivation rack rows that are the cultivation rack rows, and the stock rack row is integrated with the specific cultivation rack rows.

3. The plant cultivation device according to claim 1 or 2 **characterized in that**
the work station includes a loading section in which the culture medium units to be carried into the cultivation racks are placed by the conveying device stopping at a loading location on the moving pathway, and
the stock section is located at a position where the conveying device can carry the empty units out of the stock section and into the loading section without moving on the moving pathway from the loading location.

4. The plant cultivation device according to any one of claims 1 to 3 **characterized in that**
each cultivation unit includes an accommodating member and a holding member, wherein the accommodating member accommodates an object-to-be-stored, the object-to-be-stored has the plants planted therein, and the holding member removably holds the accommodating member, and the holding member is handled by the conveying device, and
the empty unit is the holding member in a state where the accommodating member is removed.

5. The plant cultivation device according to any one of claims 1 to 4 **characterized in that**
each of the cultivation rack rows includes
a cultivation rack intended for loading or an uppermost cultivation rack on which the culture medium unit is stored immediately after it is carried into the cultivation storage by the conveying device, and
a cultivation rack intended for unloading or a lowermost cultivation rack on which the culture medium unit is stored immediately before it is carried out of the cultivation storage by the conveying device,
the work station includes an unloading section in which the culture medium unit is placed by the conveying device after being carried out of the cultivation rack intended for unloading or the lowermost cultivation rack and transported by the conveying device, and
the unloading section is located at a position closer to the cultivation rack intended for unloading or the lowermost cultivation rack in each cultivation rack row than the cultivation rack intended for loading or the uppermost cultivation rack.

6. The plant cultivation device according to any one of claims 1 to 4 **characterized in that**
the predetermined number of cultivation racks in the cultivation rack row are separated into a predetermined number of regions, wherein each region contains at least one of the cultivation racks,
the cultivation rack contained in a lower one of the regions has a larger rack height than that contained in an upper one,
the work station includes an unloading section in which the culture medium unit that has been carried out of the cultivation rack in a lowermost one of the regions by the conveying device is transported and placed by the conveying device, and
the unloading section is located at a position closest to the lowermost region of the predetermined number of regions.

7. The plant cultivation device according to any one of claims 1 to 6 **characterized in that**
each cultivation rack row is provided with a conduit,
in each vertically adjacent pair of the cultivation racks, the culture medium unit stored in the upper cultivation rack is defined as an upper-side culture medium unit, and the culture medium unit stored in the lower cultivation rack is defined as a lower-side culture medium unit,
the conduit guides an excess part of a cultivating water supplied to the upper-side culture medium unit from the upper-side culture medium unit to the lower-side culture medium unit.

8. The plant cultivation device according to any one of claims 1 to 6 **characterized in that**
all the cultivation racks in each cultivation rack row are separated into an uppermost cultivation rack positioned uppermost, a lowermost cultivation rack positioned lowermost, and a plurality of middle cultivation racks between the uppermost and lowermost cultivation racks,
the uppermost cultivation rack is provided with a first water inlet to which a cultivating water is supplied from a cultivating water supply source and a first water outlet through which an excess part of cultivating water is discharged to a drain,
the lowermost cultivation rack is provided with a second water inlet to which the cultivating water is supplied from the cultivating water supply source and a second water outlet through which an excess part of cultivating water is discharged to the drain,
of the middle cultivation racks, an upper-part middle cultivation rack directly below the uppermost cultivation rack is provided with a third water inlet to which the cultivating water is supplied from the cultivating water supply source, and a lower-part middle cultivation rack directly above the lowermost cultivation rack is provided with a third water outlet through which an excess part of cultivating water is discharged to the drain,
a conduit is provided in each pair of vertically adjacent middle cultivation racks, the culture medium unit stored in the upper cultivation rack of the pair is defined as an upper-side culture medium unit, and the culture medium unit stored in the lower cultivation rack of the pair is defined as a lower-side culture medium unit, wherein the conduit guides the cultivating water supplied to the upper-side culture medium unit from the upper-side culture medium unit to the lower-side culture medium unit, and
after being sequentially guided from the third water inlet to the culture medium units on a lower side through the conduit and then supplied to the culture medium unit stored on the lower-part middle cultivation rack, the cultivating water is discharged from the third water outlet.
